# EUROPEAN PATENT APPLICATION

(11) **EP 3 480 433 A1**
(43) Date of publication of application: **08.05.2019**
(21) Application number: 18202879.5
(22) Date of filing: 26.10.2018
(51) Int. Cl.: F01D 15/10, F02C 3/067, F02C 3/113, H02K 51/00

(54) **MULTI-SHAFT GAS TURBINE ENGINE**

(30) Priority: 06.11.2017 GB 201718328
(71) Applicant: Rolls-Royce plc, London SW1E 6AT (GB)
(72) Inventor: Harvey, Giles, Derby, Derbyshire DE24 8BJ (GB)
(74) Representative: Rolls-Royce plc

(57) **Abstract**

A multi-shaft gas turbine engine has plural engine spools. A first spool of the engine and a second spool of the engine are operatively connected by an electrical machine that transfers power from one of the spools to the other.

## Description

### Field of the Present Disclosure

The present disclosure relates to a multi-shaft gas turbine engine having plural engine spools.

### Background

In gas turbine engines it is conventional to bleed air from compressors of the engine in order to adjust engine performance or improve handling features. However, bleeding air in this way inevitably introduces losses as the bled air is not used for combustion.

It would be desirable to provide an alternative means for adjusting engine performance.

### Summary

Accordingly, in a first aspect, the present disclosure provides a multi-shaft gas turbine engine having plural engine spools, wherein a first spool of the engine and a second spool of the engine are operatively connected by an electrical machine that transfers power from one of the spools to the other.

By transferring power between the spools electromagnetically, it is possible to avoid bleeding air from the compressors, and thereby reduce losses.

In a second aspect, the present disclosure provides the use of the electrical machine of the multi-shaft gas turbine engine of the first aspect to control the operational performance of the engine. For example, the electrical machine can be used to control the operational performance during engine transients to better avoid surge and stall, and/or to assist in starting (ground starting and/or windmill restarting)

Optional features of the present disclosure will now be set out. These are applicable singly or in any combination with any aspect of the present disclosure.

Conveniently, the electrical machine is a permanent magnet electrical machine. However, this does not exclude that the magnets of the machine, rather than being permanent magnets, can be energised coils.

Typically the electrical machine is configured such that the direction of power transfer is from the faster of the spools to the slower.

According to a first option, not forming part of the present invention, the electrical machine may include a first rotor which rotates with the first spool and supports a circumferential row of magnets, and a second rotor which rotates with the second spool and supports a circumferential row of teeth carrying a row of coils, the teeth providing paths for a first magnetic flux produced by the magnets, thereby electromagnetically linking the magnets and the coils when the first rotor rotates relative to the second rotor so that the coils set up a second magnetic flux which opposes the first magnetic flux to transmit torque between the spools. Preferably, the coils are controllably switchable such that selected of the coils can be prevented from setting up the second magnetic flux, whereby the amount of power transfer between the spools is adjustable. For example, the paths for the first magnetic flux can be blocked or altered for selected of the coils such that the first magnetic flux does not link to those coils, and/or selected of the coils can be physically displaced to remove them from the influence of the first magnetic flux, and/or selected of the coils can be electrically interrupted by suitable electrical switches such that they do not form circuits for flow of electrical current. The first and second rotors are typically arranged such that they are separated by a radial air gap. However, this does not exclude that in some variants they may be separated by an axial air gap.

According to a second option, the electrical machine may have a driver part associated with one of the first and the second spools and a driven part associated with the other of the first and the second spools, each of the driver and driven parts including a respective rotor which rotates with its spool and supports a circumferential row of magnets, and a respective stator which supports a circumferential row of teeth carrying a row of coils. Moreover, the coils of the driver and driven parts may be electrically connected such that (i) when the rotor of the driver part rotates relative to its stator, the teeth of the driver part provide paths for a first magnetic flux produced by the magnets of the driver part, thereby electromagnetically linking the magnets of the driver part and the coils of the driver part to induce an electrical voltage in the coils of the driver part; and (ii) the induced voltage is applied to the coils of the driven part, thereby setting up a second magnetic flux which opposes a third magnetic flux produced by the magnets of the rotor of the driven part to transmit torque between the spools. Thus the second option differs from the first option in that the power transfer is mediated by the electrical voltage, which is induced in the coils of the driver part and then applied to the coils of the driven part. The coils of either or both of the parts may be controllably switchable such that selected of the coils can be prevented from inducing the voltage and/or setting up the second magnetic flux, whereby the amount of power transfer between the spools can be adjusted. Thus, the paths for the first and/or second magnetic flux can be blocked or altered for selected of the coils such that the first and/or second magnetic flux does not link to those coils, and/or selected of the coils can be physically displaced to remove them from the influence of the first and/or second magnetic flux, and/or selected of the coils can be electrically interrupted by suitable electrical switches such that they do not form circuits for flow of electrical current The electrical machine may further have a power offtake by which electrical power derived from the induced voltage can be extracted from the electrical machine for use elsewhere in the engine. Additionally or alternatively, externally-derived electrical power can be fed into the electrical machine and thence the spools via the power offtake. The rotor and the stator of either or both of the driver part and the driven part are typically arranged such that they are separated by a radial air gap. However, this does not exclude that in some variants they may be separated by an axial air gap.

In the second option, the roles of the parts may be reversed, whereby the driver part can be the driven part and vice versa.

The first and second spools may be contra-rotating. This can be particularly advantageous in respect of the first option above, as the contra-rotation can generate significant relative rotational speed between the first and second rotors. In contrast, the second option allows both contra-rotating and co-rotating spools to be used

The electrical machine may be located radially inwards of a working gas annulus of the engine.

The multi-shaft gas turbine engine may be a three spool machine.

The multi-shaft gas turbine engine may have in series a compressor end, combustion equipment and a turbine end, and the electrical machine may be located at the compressor end of the engine.

### Brief Description of the Drawings

Embodiments of the present disclosure will now be described by way of example with reference to the accompanying drawings in which:
Figure 1 shows a longitudinal cross-section through a ducted fan gas turbine engine;
Figure 2 shows schematically more detail of an intermediate-pressure compressor and a high-pressure compressor of the engine of Figure 1, and a permanent magnet electrical machine that transfers power between spools of the engine; and
Figure 3 shows schematically more detail of the intermediate-pressure compressor and the high-pressure compressor, and a variant permanent magnet electrical machine that transfers power between spools of the engine.

### Detailed Description and Further Optional Features

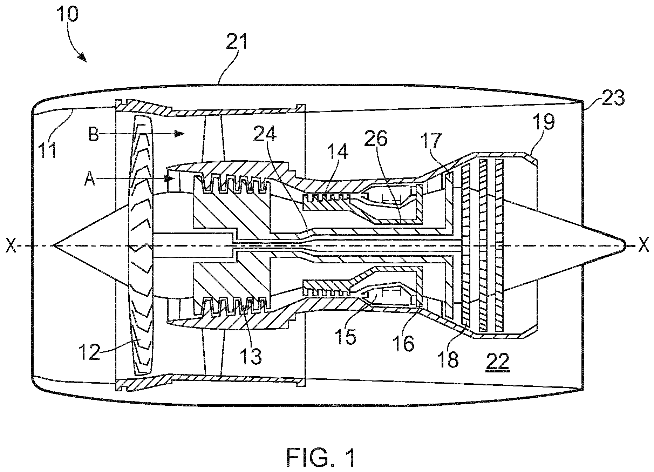

With reference to Figure 1, a ducted fan gas turbine engine is generally indicated at 10 and has a principal and rotational axis X-X. The engine comprises, in axial flow series, an air intake 11, a propulsive fan 12, an intermediate pressure compressor 13, a high-pressure compressor 14, combustion equipment 15, a high-pressure turbine 16, an intermediate pressure turbine 17, a low-pressure turbine 18 and a core engine exhaust nozzle 19. A nacelle 21 generally surrounds the engine 10 and defines the intake 11, a bypass duct 22 and a bypass exhaust nozzle 23.

During operation, air entering the intake 11 is accelerated by the fan 12 to produce two air flows: a first air flow A into the intermediate-pressure compressor 13 and a second airflow B which passes through the bypass duct 22 to provide propulsive thrust. The intermediate-pressure compressor 13 compresses the air flow A directed into it before delivering that air to the high-pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high, intermediate and low-pressure turbines respectively drive the high and intermediate-pressure compressors 14, 13 and the fan 12 by suitable interconnecting shafts.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

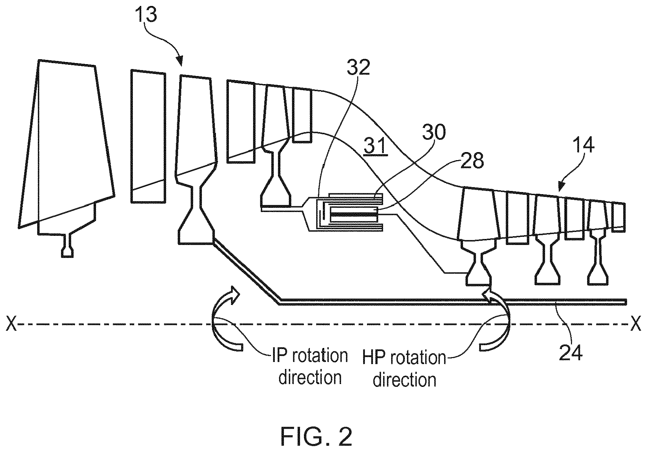

Figure 2 shows schematically more detail of the intermediate-pressure (IP) compressor 13 and the high-pressure (HP) compressor 14. The two compressors are contra-rotating as indicated by the arrows on the rotational axis X-X. The IP compressor is part of the IP spool, which also contains the IP turbine 17 and the IP shaft 24. The HP compressor is part of the HP spool, which also contains the HP turbine 18 and the HP shaft 26.

The IP and the HP spool are operatively connected by a permanent magnet electrical machine that transfers power from one of the spools to the other (typically from the faster to the slower). This machine has a first (HP) rotor 28 which is connected to the front compressor disc of the HP compressor 14 to rotate with HP spool, and a second (IP) rotor 30 which is connected to the rear compressor disc of the IP compressor 13 to rotate with IP spool. The HP and IP rotors are located inwards of the gas annulus 31 for the air flow A.

More particularly, the HP rotor 28 supports a circumferential row of permanent magnets, and the IP rotor 30 supports a circumferential row of teeth carrying a row of coils. The teeth provide paths for a magnetic flux produced by the permanent magnets, thereby electromagnetically linking the permanent magnets and the coils when the HP rotor rotates relative to the IP rotor so that the coils set up an opposing magnetic flux to transmit torque between the spools. The number of active coils can be switched by switching means 32 to control the amount of torque transmission and hence power transfer between the spools.

Although the electrical current in the coils generates heat that has to be dissipated, the overall losses involved in the power transfer between the spools can be less than that involved in bleeding compressor air to adjust engine performance. The power transferred between the spools can be used to manage compressor behaviour, e.g. to selectively increase a spool's speed to prevent stall and or surge of the compressor combination.

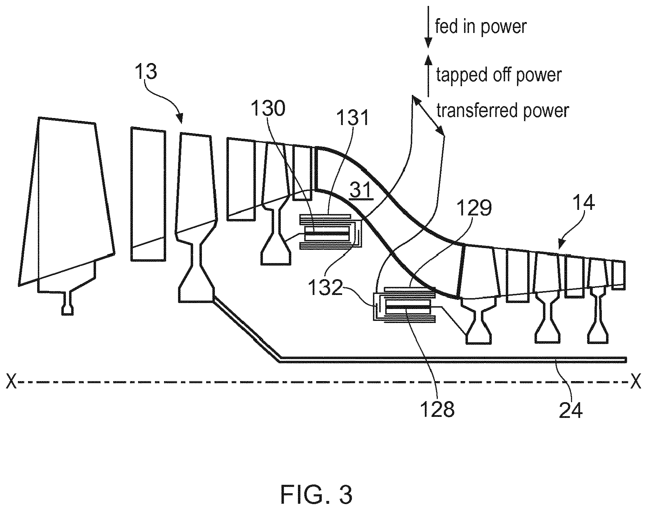

Figure 3 shows schematically more detail of the intermediate-pressure (IP) compressor 13 and the high-pressure (HP) compressor 14 having a variant electrical machine for transferring power from one of the spools to the other. In the variant, instead of having the magnets and coils of the HP rotor 28 and the IP rotor 30 interacting directly on each other, the machine is split into two parts, namely a driven part and a driver part, each having a respective rotor and stator, with power transfer between the spools being mediated by electrical connection between the coils of the two parts. This arrangement can more easily accommodate co-rotating spools. It also allows some of the power to be tapped off to be used elsewhere in the engine and/or allows power to be fed into either or both of the spools. For example, power can be fed in to assist in starting the engine, i.e. to drive the spools. That power can be applied from an external power source in a predefined and controlled way to each spool.

More particularly, the machine has an HP rotor 128 which is connected to the front compressor disc of the HP compressor 14 to rotate with the HP spool, and an HP stator 129. The HP rotor supports a circumferential row of permanent magnets, and the HP stator supports a circumferential row of teeth carrying a row of coils. The machine also has an IP rotor 130 which is connected to the rear compressor disc of the IP compressor 13 to rotate with the IP spool, and an IP stator 131. The IP rotor supports another circumferential row of permanent magnets, and the IP stator supports a circumferential row of teeth carrying another row of coils.

One of the rotor/stator pairs forms the driver part of the electrical machine, and the other of the rotor/stator pairs forms the driven part. These roles are reversible. When the rotor of the driver part rotates relative to its stator, the teeth of the driver part provide paths for a magnetic flux produced by the permanent magnets of the driver part. This electromagnetically links the permanent magnets of the driver part and the coils of the driver part to induce an electrical voltage in the coils of the driver part. The induced voltage is then applied to the coils of the driven part, which sets up another magnetic flux opposing the magnetic flux produced by the permanent magnets of the rotor of the driven part. In this way torque is transmitted between the spools, and hence power transferred. Each of the driver part and the driven part can have respective switching means 132 to switch the number of active coils and hence control the amount of torque transmission and power transfer.

Although described above in respect of permanent magnet electrical machines, the spools can alternatively be operatively connected by an electrical machine in which the magnets are formed by energised coils.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention.

## Claims

1. A multi-shaft gas turbine engine (10) having plural engine spools, wherein a first spool of the engine and a second spool of the engine are operatively connected by an electrical machine that transfers power from one of the spools to the other.

2. The multi-shaft gas turbine engine according to Claim 1, wherein the electrical machine is a permanent magnet electrical machine.

3. The multi-shaft gas turbine engine according to Claim 1 or Claim 2, wherein:
the electrical machine has a driver part associated with one of the first and the second spools and a driven part associated with the other of the first and the second spools, each of the driver and driven parts including a respective rotor (128, 130) which rotates with its spool and supports a circumferential row of magnets, and a respective stator (129, 131) which supports a circumferential row of teeth carrying a row of coils; and
the coils of the driver and driven parts are electrically connected such that (i) when the rotor of the driver part rotates relative to its stator, the teeth of the driver part provide paths for a first magnetic flux produced by the magnets of the driver part, thereby electromagnetically linking the magnets of the driver part and the coils of the driver part to induce an electrical voltage in the coils of the driver part; and (ii) the induced voltage is applied to the coils of the driven part, thereby setting up a second magnetic flux which opposes a third magnetic flux produced by the magnets of the rotor of the driven part to transmit torque between the spools.

4. The multi-shaft gas turbine engine according to Claim 3, wherein the coils of either or both of the parts are controllably switchable such that selected of the coils can be prevented from inducing the voltage and/or setting up the second magnetic flux, whereby the amount of power transfer between the spools can be adjusted.

5. The multi-shaft gas turbine engine according to Claim 3 or Claim 4, wherein the electrical machine further has a power offtake by which electrical power derived from the induced voltage can be extracted from the electrical machine for use elsewhere in the engine, and/or by which externally-derived electrical power can be fed into the electrical machine and thence the spools.

6. The multi-shaft gas turbine engine according to any one of Claims 1 to 5, wherein the first and second spools are contra-rotating.

7. The multi-shaft gas turbine engine according to any one of Claims 1 to 6, wherein the electrical machine is located radially inwards of a working gas annulus (31) of the engine.

8. The multi-shaft gas turbine engine according to any one of Claims 1 to 7, which is a three spool machine.

9. The multi-shaft gas turbine engine according to any one of Claims 1 to 8, which has in series a compressor end, combustion equipment and a turbine end, the electrical machine being located at the compressor end of the engine.

10. Use of the electrical machine of the multi-shaft gas turbine engine according to any one of the previous claims to control the operational performance of the engine.
